# EUROPÄISCHE PATENTANMELDUNG

(11) **EP 2 698 269 A2**
(43) Veröffentlichungstag der Anmeldung: **19.02.2014**
(21) Anmeldenummer: 13176228.8
(22) Anmeldetag: 12.07.2013
(51) Int. Cl.: B60K 6/48, B60K 6/547, B60K 6/26

(54) **Antriebssystem für ein Fahrzeug**

(30) Priorität: 14.08.2012 DE 102012214457
(71) Anmelder: ZF Friedrichshafen AG, 88038 Friedrichshafen (DE)
(72) Erfinder: Leimbach, Lutz, 97422 Schweinfurt (DE); Schneider, Hans-Jürgen, 97440 Werneck (DE); Schauder, Benedikt, 97532 Üchtelhausen (DE); Buhl, Jörg, 97453 Schonungen (DE); Bartha, Alexander, 97082 Würzburg (DE); Hochrein, Matthias, 97491 Aidhausen (DE); Finzel, Frank, 97422 Schweinfurt (DE); Ratte, Andreas, 97456 Dittelbrunn (DE); van Heyden, Marcus, 97456 Dittelbrunn (DE); Schäfer, Klaus, 97762 Hammelburg (DE); Mäder, Fred, 97532 Üchtelhausen (DE)

(57) **Zusammenfassung**

Ein Antriebssystem für ein Fahrzeug, umfasst einen Antriebsstrang (68) mit einem Antriebsaggregat (12) mit einem Antriebsorgan (18), einem Antriebsgetriebe (22) mit wenigstens einer mit dem Antriebsorgan (18) zur Drehmomentübertragung gekoppelten oder koppelbaren Getriebeeingangswelle (16), einer Getriebeausgangswelle (24) und einer Mehrzahl von wahlweise aktivierbaren und deaktivierbaren, zwischen der wenigstens einen Getriebeeingangswelle (16) und der Getriebeausgangswelle (24) wirkenden Drehzahlumsetzstufen (30, 32, 34, 36, 38, 40), einer Elektromaschine (64) mit einem Stator (70) und einem Rotor (72), einem Elektromaschinengetriebe (66) zur wahlweisen a) Abkopplung des Rotors (72) vom Antriebsstrang (68), oder b) Ankopplung des Rotors (72) an den Antriebsstrang (68) im Drehmomentenfluss vor der Getriebeausgangswelle (24) oder c) Ankopplung des Rotors (72) an den Antriebsstrang (68) im Drehmomentenfluss nach der Getriebeausgangswelle (24) oder an die Getriebeausgangswelle (24). Zur Ankopplung des Rotors (72) an den Antriebsstrang (68) im Drehmomentenfluss vor der Geriebeausgangswelle (24) ist der Rotor (72) an eine Drehzahlumsetzstufe (30) ankoppelbar, oder ist der Rotor (72) an das Antriebsorgan (18) im Drehmomentenfluss vor einer Drehmomentenflussunterbrechungseinrichtung (14) ankoppelbar.

## Beschreibung

Die vorliegende Erfindung betrifft ein Antriebssystem für ein Fahrzeug bzw. eine in einem derartigen Antriebssystem einsetzbare Elektromaschine/Elektromaschinengetriebe-Baugruppe.

Aus der US 2010/0180722 A1 ist ein Antriebssystem für ein Fahrzeug bekannt, bei welchem das von einer Brennkraftmaschine gelieferte Antriebsdrehmoment über eine Getriebeeingangswelle in ein Getriebe eingeleitet und über eine Getriebeausgangswelle aus dem Getriebe ausgeleitet und auf ein Differenzial übertragen werden kann. Dieses bekannte Antriebssystem umfasst ferner eine Elektromaschine mit einem Stator und einem zur Getriebeeingangswelle bzw. auch zur Antriebswelle des Antriebsaggregats koaxial angeordneten Rotor. Dieser Rotor kann durch eine Schaltanordnung wahlweise vom Antriebsstrang völlig entkoppelt werden oder an die Getriebeeingangswelle angekoppelt werden, also im Drehmomentenfluss vor der Getriebeausgangswelle an den Antriebsstrang angekoppelt werden, oder an ein Ritzel angekoppelt werden, das über ein mit der Getriebeausgangswelle verbundenes Ritzel mit einem Differenzial in Drehmomentübertragungsverbindung steht. Im letzteren Stellzustand ist der Rotor also an den Antriebsstrang im Drehmomentenfluss an die Getriebeausgangswelle bzw. nach der Getriebeausgangswelle angekoppelt.

Je nach Ankopplungszustand des Rotors kann dieser beispielsweise dazu genutzt werden, die Brennkraftmaschine anzulassen, oder dazu genutzt werden, ein unterstützendes Drehmoment zu liefern oder das zum Voranbewegen eines Fahrzeugs genutzte Drehmoment zu liefern. Insbesondere besteht auch die Möglichkeit, bei einer derartigen Anordnung die Elektromaschine dann zu aktivieren, wenn während der Durchführung von Schaltvorgängen im Antriebsgetriebe eine Zugkraftunterbrechung vorliegt.

Es ist die Aufgabe der vorliegenden Erfindung, ein Antriebssystem für ein Fahrzeug sowie eine Elektromaschine/Elektromaschinengetriebe-Baugruppe, insbesondere für ein derartiges Antriebssystem, vorzusehen, mit welchem bei der Möglichkeit der Erlangung eines einfachen konstruktiven Aufbaus eine hohe Variabilität in der Einsetzbarkeit der Elektromaschine ist.

Gemäß einem ersten Aspekt der vorliegenden Erfindung wird diese Aufgabe gelöst durch ein Antriebssystem für ein Fahrzeug, umfassend einen Antriebsstrang mit
- einem Antriebsaggregat mit einem Antriebsorgan,
- einem Antriebsgetriebe mit wenigstens einer mit dem Antriebsorgan zur Drehmomentübertragung gekoppelten oder koppelbaren Getriebeeingangswelle, einer Getriebeausgangswelle und einer Mehrzahl von wahlweise aktivierbaren und deaktivierbaren, zwischen der wenigstens einen Getriebeeingangswelle und der Getriebeausgangswelle wirkenden Drehzahlumsetzstufen,
- einer Elektromaschine mit einem Stator und einem Rotor,
- einem Elektromaschinengetriebe zur wahlweisen
   a) Abkopplung des Rotors vom Antriebsstrang, oder
   b) Ankopplung des Rotors an den Antriebsstrang im Drehmomentenfluss vor der Getriebeausgangswelle oder
   c) Ankopplung des Rotors an den Antriebsstrang im Drehmomentenfluss nach der Getriebeausgangswelle oder an die Getriebeausgangswelle.

Erfindungsgemäß ist dabei weiter vorgesehen, dass zur Ankopplung des Rotors an den Antriebsstrang im Drehmomentenfluss vor der Getriebeausgangswelle
- der Rotor an eine Drehzahlumsetzstufe ankoppelbar ist,
   oder
- der Rotor an das Antriebsorgan im Drehmomentenfluss vor einer Drehmomentenflussunterbrechungseinrichtung ankoppelbar ist.

Gemäß der vorliegenden Erfindung sind also zwei alternative Ankopplungsmöglichkeiten vorgesehen, um den Rotor an den Antriebsstrang vor der Getriebeausgangswelle anzukoppeln. Dies betrifft denjenigen Zustand, in welchem das von der Elektromaschine gelieferte Drehmoment dazu genutzt werden kann, ein zum Starten des Antriebsaggregats, also insbesondere einer Brennkraftmaschine, erforderliches Startdrehmoment zu liefern. Gemäß der ersten Alternative ist der Rotor an eine Drehzahlumsetzstufe ankoppelbar. Dies bedeutet, dass der Rotor über die Drehzahlumsetzstufe und damit auch die Getriebeeingangswelle auf das Antriebsaggregat einwirken kann. Bei der zweiten Alternative ist der Rotor im Drehmomentenfluss vor einer Drehmomentenflussunterbrechungseinrichtung an das Antriebsorgan des Antriebsaggregats ankoppelbar. Dies hat zur Folge, dass das zum Unterstützen des Startens des Antriebsaggregats gelieferte Drehmoment unter vollständiger Umgehung des Antriebsgetriebes in das Antriebsaggregat eingeleitet werden kann, was einen besonders effizienten Betrieb der Elektromaschine gewährleistet. Des Weiteren hat diese Variante den Vorteil, dass auf einen Stellzustand der Drehmomentenflussunterbrechungseinrichtung, also beispielsweise einer Kupplung, nicht geachtet werden muss.

Es sei darauf hingewiesen, dass im Sinne der vorliegenden Erfindung eine Bezugnahme auf den Drehmometenfluss den in einem Antriebszustand vorhandenen Drehmomentenfluss von einem Antriebsaggregat über das Antriebsgetriebe auf angetriebene Räder, allgemein also den so genannten Zugzustand, anspricht.

Bei einer baulich einfach zu realisierenden Ausgestaltungsvariante wird vorgeschlagen, dass die Drehzahlumsetzstufen jeweils ein mit der Getriebeeingangswelle gekoppeltes oder koppelbares erstes Antriebsgetriebeübertragungsorgan und ein mit der Getriebeausgangswelle gekoppeltes oder koppelbares zweites Antriebsgetriebeübertragungsorgan umfassen und dass der Rotor an ein Antriebsgetriebeübertragungsorgan, vorzugsweise zweites Antriebsgetriebeübertragungsorgan, der einen Drehzahlumsetzstufe ankoppelbar ist. Besonders vorteilhaft kann dieser Aspekt genutzt werden, wenn das erste Antriebsgetriebeübertragungsorgan permanent mit der Getriebeausgangswelle gekoppelt ist und das zweite Antriebsgetriebeübertragungsorgan beispielsweise durch eine Synchronisiervorrichtung wahlweise mit der Getriebeausgangswelle koppelbar und somit auch von dieser entkoppelbar ist, da bei derartiger Ausgestaltung bei von der Getriebeausgangswelle abgekoppeltem zweiten Antriebsgetriebeübertragungsorgan im Startzustand die dabei grundsätzlich nicht im Drehmomentenfluss liegende Getriebeausgangswelle auch nicht mitgedreht werden muss.

Um das im Zugzustand vom Antriebsaggregat gelieferte Drehmoment im Antriebsstrang weiterleiten zu können, wird vorgeschlagen, dass die Getriebeausgangswelle einen Abtriebsendbereich aufweist und dass die eine Drehzahlumsetzstufe die dem Abtriebsendbereich nächstliegend positionierte Drehzahlumsetzstufe ist. Dabei ist vorteilhafterweise die Getriebeausgangswelle im Abtriebsendbereich in Drehmomentübertragungsverbindung mit einem Differenzial. Das Positionieren der einen Drehzahlumsetzstufe nahe an demjenigen Bereich, an welchem die Getriebeausgangswelle auch in Wechselwirkung mit weiteren Antriebsstrangkomponenten, insbesondere einem Differenzial, steht, ermöglicht eine sehr kompakte Ausgestaltung des Elektromaschinengetriebes zur wahlweisen Ankopplung an den Antriebsstrang im Drehmomentenfluss nach der Getriebeausgangswelle oder an die Getriebeausgangswelle bzw. zur Ankopplung an den Antriebsstrang im Drehmomentenfluss vor der Getriebeausgangswelle, also beispielsweise über eine Drehzahlumsetzstufe an die Getriebeeingangswelle.

Eine vollständige Umgehung des Getriebes im Startzustand des Antriebsaggregats kann in besonders vorteilhafter Weise erreicht werden, wenn ein Anlassübertragungsorgan, also z. B. Anlasszahnrad, mit dem Antriebsorgan gekoppelt ist und der Rotor an das Anlassübertragungsorgan ankoppelbar ist.

Zur wahlweisen Ankopplung des Rotors an ein Antriebsgetriebeübertragungsorgan oder ein Anlassübertragungsorgan, im Allgemeinen ein Antriebsstrangübertragungsorgan, wird vorgeschlagen, dass das Elektromaschinengetriebe ein mit dem Rotor gekoppeltes oder koppelbares erstes Elektromaschinengetriebeübertragungsorgan umfasst und dass das erste Elektromaschinenübertragungsorgan mit dem einen Antriebsgetriebeübertragungsorgan oder dem Anlassübertragungsorgan in Drehmomentübertragungsverbindung steht oder bringbar ist.

Um bei dem erfindungsgemäßen Antriebssystem in einfacher Art und Weise ein unterstützendes Drehmoment durch die Elektromaschine, beispielsweise im Fahrtzustand oder während der Durchführung von Schaltvorgängen im Antriebsgetriebe, liefern zu können, wird vorgeschlagen, dass das Elektromaschinengetriebe ein mit dem Rotor gekoppeltes oder wahlweise koppelbares zweites Elektromaschinengetriebeübertragungsorgan umfasst und dass das zweite Elektromaschinengetriebeübertragungsorgan mit der Getriebeausgangswelle oder/und einem durch die Getriebeausgangswelle antreibbaren Differenzial in Drehmomentübertragungsverbindung steht oder bringbar ist. Dabei kann beispielsweise vorgesehen sein, dass das zweite Elektromaschinengetriebeübertragungsorgan mit der Getriebeausgangswelle oder/und dem Differenzial in Drehmomentübertragungsverbindung steht und mit dem Rotor wahlweise koppelbar ist.

Die wesentlichen Systemkomponenten des Antriebsgetriebes, beispielsweise dessen Drehzahlumsetzstufen, sind in einem einen Nassraum umgrenzenden Antriebsgetriebegehäuse untergebracht. Um dabei das Antriebsgetriebe möglichst kompakt gestalten zu können, wird weiter vorgeschlagen, dass die Elektromaschine außerhalb des Antriebsgetriebegehäuses angeordnet ist. Damit wird auch vermieden, dass die Elektromaschine dem im Antriebsgetriebegehäuse im Allgemeinen vorhandenen Schmierfluid, also beispielsweise Öl, permanent ausgesetzt ist.

Um durch Einwirkung auf das Elektromaschinengetriebe den Rotor in seine verschiedenen Ankopplungszustände bringen zu können, wird vorgeschlagen, dass eine Aktuatoranordnung vorgesehen ist zum wahlweisen Abkoppeln des Rotors vom Antriebsstrang oder Ankoppeln des Rotors an den Antriebsstrang, wobei vorzugsweise die Aktuatoranordnung durch eine Antriebsgetriebeaktuatoranordnung zum Aktivieren und Deaktivieren der Drehzahlumsetzstufen bereitgestellt ist.

Gemäß einem weiteren Aspekt der vorliegenden Erfindung wird die eingangs genannte Aufgabe gelöst durch eine Elektromaschine/Elektromaschinengetriebe-Baugruppe, insbesondere für ein erfindungsgemäßes Antriebssystem, umfassend:
- eine Elektromaschine mit einem Stator und einem Rotor,
- ein Elektromaschinengetriebe mit einem mit dem Rotor gekoppelten oder koppelbaren ersten Elektromaschinengetriebeübertragungsorgan und einem mit dem Rotor gekoppelten oder koppelbaren zweiten Elektromaschinengetriebeübertragungsorgan.

Erfindungsgemäß ist dabei weiter eine durch den Rotor zur Drehung antreibbare Elektromaschinegetriebewelle vorgesehen, wobei wenigstens ein Elektromaschinengetriebeübertragungsorgan wahlweise mit der Elektromaschinengetriebewelle zur gemeinsamen Drehung koppelbar ist.

Durch das Bereitstellen der Baugruppe mit einer derartigen Elektromaschinengetriebewelle und ein damit wahlweise koppelbares Elektromaschinengetriebeübertragungsorgan wird es möglich, für die Baugruppe eine in Bezug auf das Antriebsgetriebe bzw. den gesamten Antriebsstrang sehr freie Auswahl der Positionierung treffen zu können, ohne dabei beispielsweise auf die aus dem Stand der Technik bekannte koaxiale Anordnung der Elektromaschine beispielsweise zur Getriebeeingangswelle achten zu müssen. Dies bedeutet, dass die gesamte Baugruppe beispielsweise in einem Bereich nahe an einem Antriebsgetriebegehäuse positioniert werden und dort in Drehmomentübertragungsverbindung mit verschiedenen Antriebsstrangkomponenten gebracht werden kann. Dies ermöglicht beispielsweise den Aufbau der Elektromaschine als sehr kostengünstige Asynchronmaschine, während bei der aus dem Stand der Technik bekannten koaxialen Anordnung zur Antriebswelle bzw. Getriebeeingangswelle im Allgemeinen sehr kostenintensive permanent erregte Synchronmaschinen einzusetzen sind.

Um bei stabiler Ausgestaltung eine einfache Drehmomentübertragungswechselwirkung zwischen der Baugruppe und dem Antriebsstrang erlangen zu können, wird vorgeschlagen, dass die Elektromaschinengetriebewelle an wenigstens einem, vorzugsweise zwei in Richtung der Elektromaschinengetriebewelle in Abstand zueinander angeordneten Lagerbereichen in einem Baugruppengehäuse gelagert ist, wobei vorzugsweise das Baugruppengehäuse in Zuordnung zu wenigstens einem Elektromaschinengetriebeübertragungsorgan eine Durchgriffsöffnung zur Herstellung einer Drehmomentübertragungswechselwirkung mit einem Antriebsstrangübertragungsorgan aufweisen kann.

Um eine zuverlässige Trennung desjenigen Volumenbereichs, in welchem Komponenten, insbesondere Übertragungsorgane, geschmiert werden, also einem Nassraum, von einem Trockenraum erlangen zu können, wird vorgeschlagen, dass wenigstens ein Elektromaschinengetriebeübertragungsorgan bezüglich des Baugruppengehäuses oder/und bezüglich der Elektromaschinengetriebewelle fluiddicht abgedichtet drehbar oder/und in Richtung der Elektromaschinengetriebewelle verschiebbar ist.

Das wahlweise Herstellen und Aufheben einer Drehmomentübertragungsverbindung zwischen der Baugruppe und dem Antriebsstrang kann dadurch in einfacher Weise erreicht werden, dass ein Elektromaschinengetriebeübertragungsorgan zum Herstellen und Aufheben einer Drehmomentübertragungsverbindung mit einem Antriebsstrangübertragungsorgan auf der Elektromaschinengetriebewelle verschiebbar ist. Dabei ist vorteilhafterweise das eine Elektromaschinengetriebeübertragungsorgan mit der Elektromaschinengetriebewelle zur gemeinsamen Drehung gekoppelt, wobei dieser Koppelzustand beispielsweise unabhängig sein kann von der Verschiebeposition dieses Elektromaschinengetriebeübertragungsorgans.

Um bei dieser Art und Weise zur Herstellung einer Drehankopplung des einen Elektromaschinengetriebeübertragungsorgans mit einem Antriebsstrangübertragungsorgan bei einfacher Betätigbarkeit ein sanftes Ankoppeln erreichen zu können, wird vorgeschlagen, dass dem einen Elektromaschinengetriebeübertragungsorgan eine Aktuatoranordnung zur axialen Verschiebung auf der Elektromaschinengetriebewelle zugeordnet ist, wobei vorzugsweise das eine Elektromaschinengetriebeübertragungsorgan über axialelastische Verbindungsmittel durch die Aktuatoranordnung beaufschlagbar ist.

Bei einer alternativen oder in Zuordnung zu nur einem der Elektromaschinengetriebeübertragungsorgane einsetzbaren Aufbau zur Drehankopplung kann vorgesehen sein, dass wenigstens ein Elektromaschinengetriebeübertragungsorgan auf der Elektromaschinengetriebewelle drehbar getragen ist und vermittels eines Kopplungsorgans mit der Elektromaschinengetriebewelle zur gemeinsamen Drehung koppelbar ist.

Die vorliegende Erfindung wird nachfolgend mit Bezug auf die beiliegenden Figuren detailliert beschrieben. Es zeigt:
- Fig. 1: in prinzipartiger Darstellung ein Antriebssystem mit einem Antriebsaggregat, einem Antriebsgetriebe und einer Elektromaschine/Elektromaschinengetriebe-Baugruppe;
- Fig. 2: in vergrößerter Ansicht die Elektromaschine/Elektromaschinengetriebe-Baugruppe der Fig. 1;
- Fig. 3: das Antriebssystem der Fig. 1 in einem Anlasszustand;
- Fig. 4: das Antriebssystem der Fig. 1 in einem Antriebsunterstützungszustand;
- Fig. 5: eine der Fig. 1 entsprechende Darstellung eines alternativen Antriebssystems;
- Fig. 6: eine der Fig. 1 entsprechende Darstellung eines alternativen Antriebssystems;
- Fig. 7: eine der Fig. 1 entsprechende Darstellung eines alternativen Antriebssystems;
- Fig. 8: das Antriebssystem der Fig. 7 in einem Anlasszustand;
- Fig. 9: das Antriebssystem der Fig. 7 in einem Antriebsunterstützungszustand;
- Fig. 10: eine perspektivische Darstellung einer Elektromaschine/Elektromaschinengetriebe-Baugruppe;
- Fig. 11: die Baugruppe der Fig. 10 in anderer perspektivischer Darstellung;
- Fig. 12: die Baugruppe der Fig. 10 in anderer perspektivischer Darstellung;
- Fig. 13: die Baugruppe der Fig. 10 mit teilweise weggeschnitten dargestelltem Baugruppengehäuse;
- Fig. 14: eine Teil-Längsschnittdarstellung der Baugruppe der Fig. 10.

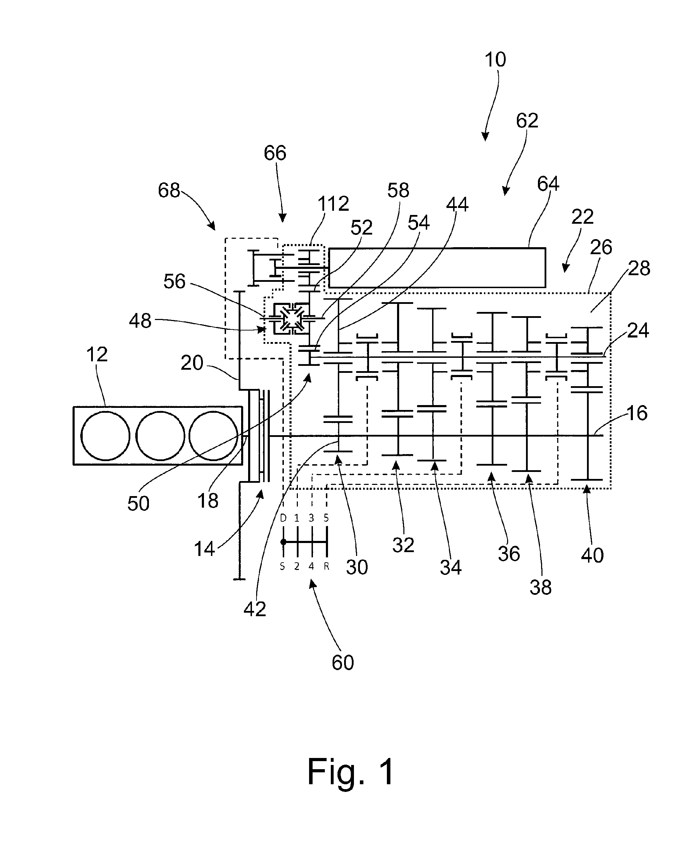

In Fig. 1 ist ein Antriebssystem beispielsweise für ein Kraftfahrzeug allgemein mit 10 bezeichnet. Das Antriebssystem 10 umfasst als Antriebsaggregat 12 beispielsweise eine Brennkraftmaschine, welche über eine schematisch dargestellte und als Drehmomentenflussunterbrechungseinrichtung wirksame Kupplung 14 an eine Getriebeeingangswelle 16 ankoppelbar ist. An eine als Antriebsorgan 18 wirksame Antriebswelle, beispielsweise Kurbelwelle, ist ein Anlasszahnrad 20 beispielsweise durch Verschraubung oder dergleichen angekoppelt, d. h. damit zur gemeinsamen Drehung verbunden.

Ein allgemein mit 22 bezeichnetes Antriebsgetriebe weist parallel zur Getriebeeingangswelle 16 eine Getriebeausgangswelle 24 auf. Die Getriebeeingangswelle 16 und die Getriebeausgangswelle 24 sind in dem von einem Antriebsgetriebegehäuse 26 umschlossenen Nassraum 28 drehbar gelagert. An dem dem Antriebsaggregat 12 zugewandten Ende des Antriebsgetriebes 22 ragt die Getriebeeingangswelle 16 über das Antriebsgetriebegehäuse 26 hinaus, beispielsweise um in ihrem außerhalb des Antriebsgetriebegehäuses 26 liegenden Endbereich mit einer Kupplungsscheibe oder dergleichen drehfest gekoppelt zu werden.

Zur Drehmomentübertragung zwischen der Getriebeeingangswelle 16 und der Getriebeausgangswelle 24 ist eine Mehrzahl von Drehzahlumsetzstufen 30, 32, 34, 36, 38, 40 vorgesehen, die allgemein als Gangstufen oder Gänge bezeichnet werden können. So können die Drehzahlumsetzstufen 30 und 32 die einer 1-2-Schaltgasse zugeordneten ersten und zweiten Gänge sein. Die Drehzahlumsetzstufen 34, 36 können die einer 3-4-Schaltgasse zugeordneten dritten und vierten Gänge sein, während die Drehzahlumsetzstufen 38, 40 der einer 5-R-Schaltgasse zugeordnete fünfter Gang bzw. Rückwärtsgang sein können. Jede dieser Drehzahlumsetzstufen 30, 32, 34, 36, 38, 40 umfasst zumindest zwei beispielsweise als Zahnräder ausgebildete Antriebsgetriebeübertragungsorgane, von welchen eines der Getriebeeingangswelle 16 und eines der Getriebeausgangswelle 24 zugeordnet ist. Bei der als Rückwärtsgang wirksamen Drehzahlumsetzstufe 40 ist ein die Drehrichtung umkehrendes weiteres, in der Fig. 1 nicht dargestellte Antriebsgetriebeübertragungsorgan vorzusehen. Beispielhaft sei mit Bezug auf die als 1. Gang wirksame Drehzahlumsetzstufe ausgeführt, dass deren erstes Antriebsgetriebeübertragungsorgan 42 der Getriebeeingangswelle 16 zugeordnet ist bzw. mit dieser drehfest gekoppelt ist. Ihr zweites Antriebsgetriebeübertragungsorgan 44 ist der Getriebeausgangswelle 24 zugeordnet bzw. grundsätzlich auf dieser frei drehbar und über eine allgemein mit 46 bezeichnete Koppelvorrichtung, beispielsweise Synchronisiervorrichtung, mit der Getriebeausgangswelle 24 koppelbar, so dass bei dann eingelegtem ersten Gang ein Drehmoment im Zugzustand des Antriebsaggregats 12 über das Antriebsorgan 18, die Kupplung 14, die Getriebeeingangswelle 16, das erste Antriebsgetriebeübertragungsorgan 42, das zweite Antriebsgetriebeübertragungsorgan 44 und die Getriebeausgangswelle 24 auf ein allgemein mit 48 bezeichnetes Differenzial geleitet werden kann. Hierzu ist an einem Abtriebsendbereich 50 der Getriebeausgangswelle 24 ein mit einem Differenzialübertragungsorgan 52 am Differenzial 48 in Drehmomentübertragungsverbindung bzw. Kämmeingriff stehendes Getriebeausgangswellenübertragungsorgan 54 vorgesehen. Vom Differenzial 48 kann das in diesem aufgenommene Drehmoment dann weiter auf zwei beispielsweise mit angetriebenen Rädern gekoppelte Antriebswellen 56, 58 weitergeleitet werden.

Die verschiedenen vorangehend angesprochenen Übertragungsorgane, also die Antriebsgetriebeübertragungsorgane der verschiedenen Drehzahlumsetzstufen 30, 32, 34, 36, 38, 40, das Differenzialübertragungsorgan 52 und das Getriebeausgangswellenübertragungsorgan 54 sind zum Ermöglichen einer schlupffreien Übertragung auch großer Drehmomente vorteilhafterweise als bei entsprechender Zuordnung zueinander in Kämmeingriff stehende Zahnräder ausgebildet.

Entsprechend der für einen jeweiligen Fahrzustand zu aktivierenden Drehzahlumsetzstufe bzw. Gangstufe wird die in Zuordnung zu jeweils einem Paar von Drehzahlumsetzstufen vorgesehene Koppelvorrichtung, beispielsweise Koppelvorrichtung 46 für die Drehzahlumsetzstufen 30 und 32, in einen jeweiligen Kopplungszustand geschaltet, in welchem eines der beiden zweiten Antriebsgetriebeübertragungsorgane an die Getriebeausgangswelle 24 angekoppelt ist, wobei selbstverständlich nur bei einer der drei den insgesamt sechs Drehzahlumsetzstufen zugeordneten Koppelvorrichtungen jeweils eine Ankopplung eines zweiten Antriebsgetriebeübertragungsorgans an die Getriebeausgangswelle 24 vorgesehen sein darf. Bei Ausgestaltung als automatisiertes Schaltgetriebe des Antriebsgetriebes 22 als Handschaltgetriebe kann dieses An- bzw. Abkoppeln von zweiten Antriebsgetriebeübertragungsorganen manuell über ein Schaltgestänge erfolgen. Bei Ausgestaltung als automatisiertes Schaltgetriebe kann die An- bzw. Abkopplung durch eine anhand der Schaltkulisse 60 symbolisch dargestellte Aktuatoranordnung erfolgen. Diese Aktuatoranordnung kann einen oder mehrere durch einen oder mehrere Stellantriebe zur Auswahl einer jeweiligen der Schaltgassen und zur Bewegung entlang einer jeweiligen der Schaltgassen bewegbaren Schaltfinger aufweisen, der in die Aussparung einer jeweiligen Schaltgabel einer der Koppelvorrichtungen, also beispielsweise auch der Koppelvorrichtung 46, eingreifend positioniert werden kann, um bei Bewegung in Richtung der jeweiligen Schaltgasse dann ein Antriebsgetriebeübertragungsorgan an die Getriebeausgangswelle 24 anzukoppeln oder von dieser abzukoppeln.

Das Antriebssystem 10 umfasst ferner eine allgemein mit 62 bezeichnete Elektromaschine/Elektromaschinengetriebe-Baugruppe. Diese umfasst eine beispielsweise als Asynchronmotor ausgebildete Elektromaschine 64 und ein dieser zugeordnetes Elektromaschinengetriebe 66. Das Elektromaschinengetriebe 66 dient dazu, die Elektromaschine 64 wahlweise an den das Antriebsaggregat 12, das Antriebsgetriebe 22 und das in dieses integrierte Differenzial 48 umfassenden Antriebsstrang 68 anzukoppeln bzw. von diesem abzukoppeln.

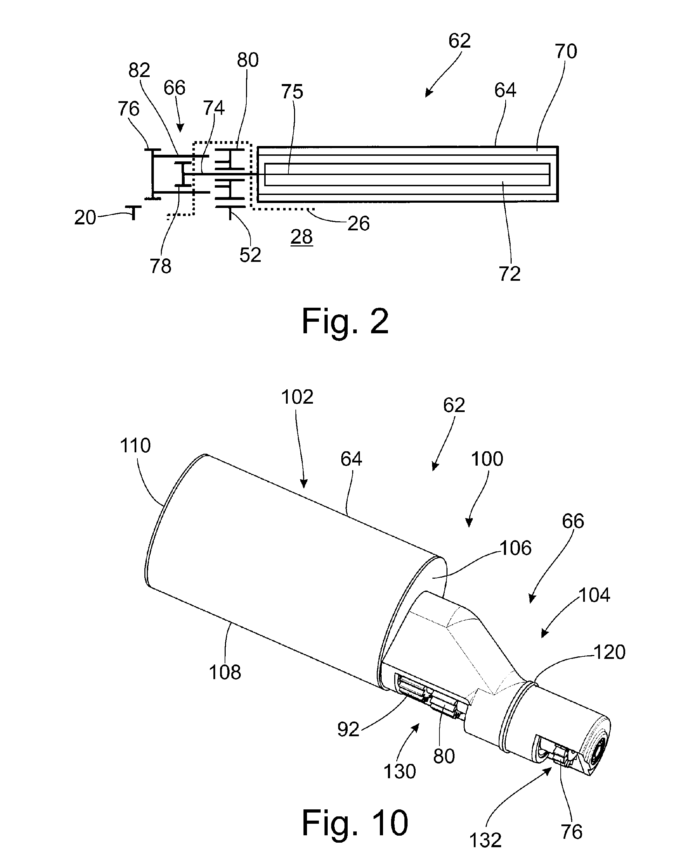

Der Aufbau der Elektromaschine/Elektromaschinengetriebe-Baugruppe 62 wird nachfolgend mit Bezug auf die Fig. 2 detaillierter beschrieben.

Man erkennt in Fig. 2, dass die Elektromaschine 64 einen Stator 70 und einen Rotor 72 umfasst. Der Rotor 72 ist an eine Elektromaschinengetriebewelle 74 angekoppelt. Die Elektromaschinengetriebewelle 74 ist im dargestellten Beispiel unmittelbar axial anschließend an eine Rotorwelle 75 angeordnet und mit dieser entweder zur gemeinsamen Drehung gekoppelt oder integral ausgebildet.

Das Elektromaschinengetriebe 66 umfasst ein beispielsweise als Zahnrad bzw. Ritzel ausgebildetes erstes Elektromaschinengetriebeübertragungsorgan 76. Dieses ist über eine symbolhaft dargestellte Keilwellenverzahnung 78 mit der Elektromaschinengetriebewelle 74 zur gemeinsamen Drehung gekoppelt, entlang der Elektromaschinengetriebewelle 74 grundsätzlich jedoch axial verschiebbar.

Das Elektromaschinengetriebe 66 umfasst ein zweites beispielsweise als Zahnrad oder Ritzel ausgebildetes Elektromaschinengetriebeübertragungsorgan 80. Dieses ist auf der Elektromaschinengetriebewelle 74 an axial feststehender Positionierung grundsätzlich frei drehbar getragen bzw. gelagert.

In dem in Fig. 2 prinzipiell dargestellten Aufbau ist an dem ersten Elektromaschinengetriebeübertragungsorgan 76 ein Kopplungsorgan 82 ausgebildet. Durch axiale Verschiebung des Kopplungsorgans 82 kann dieses in Drehkopplungseingriff mit dem zweiten Elektromaschinengetriebeübertragungsorgan 80 gebracht werden, wozu diese beiden Komponenten beispielsweise mit Schaltklauenverzahnungen an ihren einer zugewandt liegenden Bereichen ausgebildet sein können. Durch axiale Verlagerung des ersten Elektromaschinengetriebeübertragungsorgans 76 auf das zweite Elektromaschinengetriebeübertragungsorgan 80 zu kann über das erste Elektromaschinengetriebeübertragungsorgan 76 und das in diesem Beispiel daran z. B. integral ausgebildete Kopplungsorgan 82 das zweite Elektromaschinengetriebeübertragungsorgan 80 mit der Elektromaschinengetriebewelle 74 zur gemeinsamen Drehung gekoppelt werden.

Das zweite Elektromaschinengetriebeübertragungsorgan 80 steht vorzugsweise in direkter Drehmomentübertragungsverbindung, also beispielsweise in Kämmeingriff, mit dem Differenzialübertragungsorgan 52. Ist durch entsprechende Axialverlagerung des ersten Elektromaschinengetriebeübertragungsorgans 76 das zweite Elektromaschinengetriebeübertragungsorgan 80 an die Elektromaschinengetriebewelle 74 angekoppelt, so ist auch der Rotor 72 der Elektromaschine 64 an das Differenzialübertragungsorgan 52 und somit das Differenzial 48 bzw. allgemein den Antriebsstrang 68 angekoppelt. Ist das erste Elektromaschinengetriebeübertragungsorgan 76 in seiner in den Fig. 1 und 2 dargestellten neutralen Positionierung, so koppelt es das zweite Elektromaschinengetriebeübertragungsorgan 80 nicht an die Elektromaschinengetriebewelle 74 an. Auch ist das erste Elektromaschinengetriebeübertragungsorgan 76 in dieser neutralen Positionierung derart bezüglich des an das Antriebsorgan 18, also beispielsweise die Kurbelwelle, angekoppelten Anlassübertragungsorgans 20 positioniert, dass diese beiden Komponenten nicht in Drehmomentübertragungsverbindung stehen und somit auch keine Ankopplung des Rotors 72 an den Antriebsstrang 68 erfolgt.

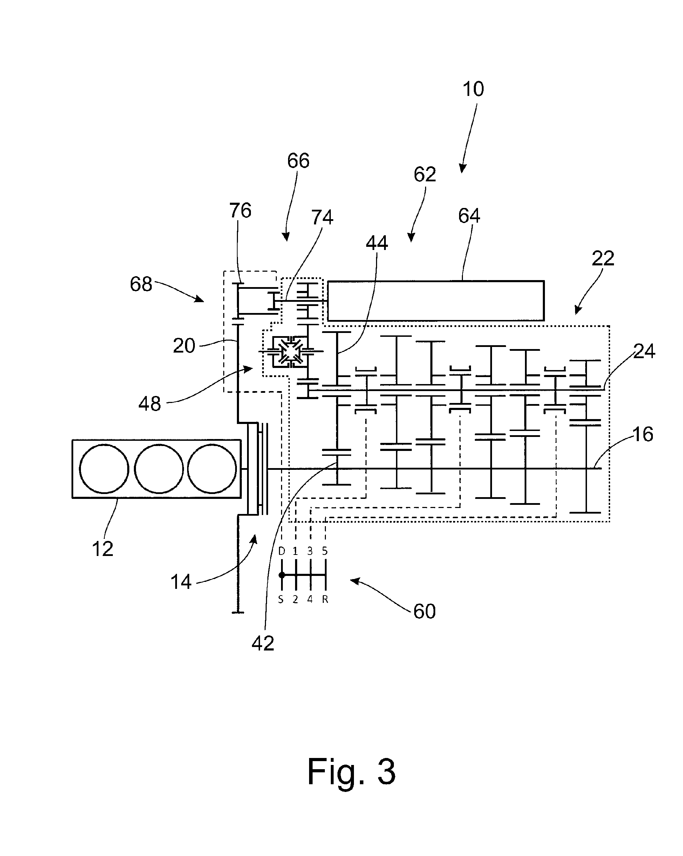

Der Zustand, in welchem durch entsprechende Axialverlagerung das erste Elektromaschinengetriebeübertragungsorgan 76 in Drehmomentübertragungsverbindung mit dem Anlassübertragungsorgan 20 steht, ist in Fig. 3 gezeigt. In diesem Zustand ist der Rotor 72 der Elektromaschine 64 über das erste Elektromaschinengetriebeübertragungsorgan 76 an das Anlassübertragungsorgan 20 und somit den Antriebsstrang 68 angekoppelt.

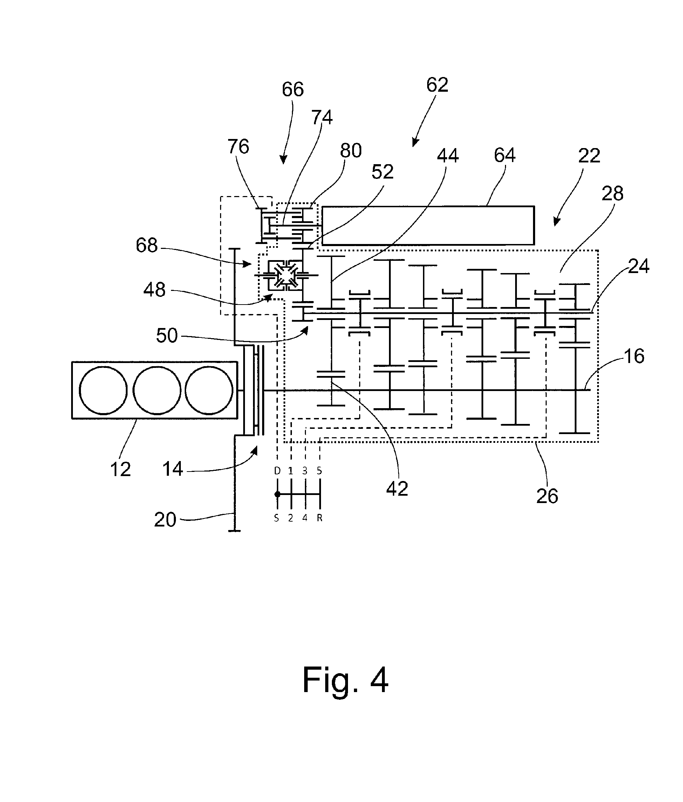

Die Verlagerung des ersten Elektromaschinengetriebeübertragungsorgans 76 entlang der Elektromaschinengetriebewelle 74 kann beispielsweise durch die vermittels der Schaltkulisse 60 dargestellte Aktuatoranordnung erfolgen. Dieser kann eine weitere Schaltgasse D-S zugeordnet sein, in welcher durch entsprechende Verschiebung eines Schaltfingers das erste Elektromaschinengetriebeübertragungsorgan 76 entweder in seine neutrale Stellung (Fig. 1, Fig. 2) gebracht werden kann, in welcher die Elektromaschine 64 vollständig vom Antriebsstrang 68 abgekoppelt ist, oder in eine der Schaltgassenstellung D entsprechende Position (Fig. 4) gebracht werden kann, in welcher das zweite Elektromaschinengetriebeübertragungsorgan 80 an die Elektromaschinengetriebewelle 74 angekoppelt ist und mithin der Rotor 72 über das Differenzialantriebsorgan 52 an den Antriebsstrang 68 angekoppelt ist, oder in seine der Schaltstellung S entsprechende Position (Fig. 3) gebracht werden kann, in welcher der Rotor 72 der Elektromaschine 64 über das Anlassübertragungsorgan 20 an den Antriebsstrang 68 angekoppelt ist. Um bei der Axialbewegung des beispielsweise als Zahnrad bzw. Ritzel ausgebildeten ersten Elektromaschinengetriebeübertragungsorgans 76 ein Eingreifen in eine entsprechende Verzahnung des Anlassübertragungsorgangs 20, welches im Allgemeinen ebenfalls als Zahnrad ausgebildet sein wird, zu ermöglichen, können die Zähne dieser Verzahnungen in axialer Richtung bzw. ihren axial in Eingriff zu bringenden Endbereichen spitz zulaufend ausgeführt sein.

Mit den drei in den Fig. 1, 3 und 4 dargestellten Stellzuständen des Elektromaschinengetriebes 66 lassen sich verschiedene Wirkmechanismen der Elektromaschine/Elektromaschinengetriebe-Baugruppe 62 realisieren. Ist das erste Elektromaschinengetriebeübertragungsorgan 76 in der in Fig. 1 dargestellten neutralen Positionierung, so ist die Elektromaschine/Elektromaschinengetriebe-Baugruppe 62 vom Antriebsstrang 68 vollständig abgekoppelt. Sie kann weder zur Abgabe eines Drehmoments, noch als Generator zur Rückspeisung von Energie genutzt werden. Ist das Elektromaschinengetriebe 66 in dem in Fig. 3 dargestellten Stellzustand mit Ankopplung an den Antriebsstrang 68 im Bereich des im Drehmomentenfluss vor der Kupplung 14 liegenden Anlassübertragungsorgans 20, so kann die Elektromaschine 64 bzw. das von dieser abgegebene Drehmoment zum Starten bzw. Anlassen des Antriebsaggregats 12 genutzt werden. Da in diesem Zustand vorteilhafterweise die Kupplung ausgerückt oder/und im Antriebsgetriebe 22 keine der Drehmomentumsetzstufen 30, 32, 34, 36, 38, 40 eingelegt bzw. aktiviert ist, entstehen nur vergleichsweise geringe Schleppverluste. Grundsätzlich könnte bei Ankopplung des Elektromaschinengetriebes 66 an das Anlassübertragungsorgan 20 die Elektromaschine 64 auch zur Erzeugung eines im Fahrbetrieb unterstützenden Drehmoments genutzt werden, welches über das Anlassübertragungsorgan 20 und die Kupplung 14 in die Getriebeeingangswelle 16 und über eine jeweils aktivierte Drehzahlumsetzstufe zur Getriebeausgangswelle 24 und zum Differenzial 48 weitergeleitet werden kann.

Ist das Elektromaschinengetriebe 66 in dem in Fig. 4 dargestellten Stellzustand, also an den Antriebsstrang 68 über das Differenzialübertragungsorgan 52 angekoppelt, so besteht eine permanente Drehmomentübertragungsverbindung zwischen der Elektromaschine 64 und dem Antriebsstrang 68, so dass in diesem Zustand die Elektromaschine 64 sowohl zur Erzeugung eines im Antriebszustand unterstützenden Drehmoments eingesetzt werden kann, als auch als alternatives Antriebsaggregat bei deaktiviertem Antriebsaggregat 12. Im Unterstützungszustand wird ein grundsätzlich erforderliches Antriebsdrehmoment vom Antriebsaggregat 12 über die Kupplung 14 in das Antriebsgetriebe 22 eingeleitet und über das Differenzial 48 auf die angetriebenen Räder weitergeleitet. Zu diesem grundsätzlich vorhandenen Antriebsdrehmoment kommt dann das von der Elektromaschine 64 bereitgestellte unterstützende Drehmoment hinzu. Soll die Elektromaschine 64 als alleiniges Antriebsaggregat genutzt werden, so kann bei beispielsweise deaktiviertem Antriebsaggregat 12 und vorteilhafterweise ausgerückter Kupplung 14 das Antriebsgetriebe 22 in eine neutrale Stellung gebracht werden, was bedeutet, dass bei keiner Drehzahlumsetzstufe 30, 32, 34, 36, 38, 40 eines der zweiten Antriebsgetriebeübertragungsorgane an die Getriebeausgangswelle 24 angekoppelt ist. Das von der Elektromaschine 64 bereitgestellte Drehmoment wird dann über das Differenzialübertragungsorgan 52 in das Differenzial 48 eingeleitet. Da das Getriebeausgangswellenübertragungsorgan 54 gleichermaßen in permanentem Drehmomentübertragungseingriff mit dem Differenzialübertragungsorgan 52 steht, wird zwar die Getriebeausgangswelle 24 in diesem Zustand zur Drehung angetrieben. Da keines der zweiten Antriebsgetriebeübertragungsorgane an diese angekoppelt ist, entstehen auch hier nur vergleichsweise geringe Schleppmomente. Der Rotor 72 der Elektromaschine 64 ist in diesem Zustand an den Antriebsstrang 68 im Drehmomentenfluss nach der Getriebeausgangswelle 24 bzw. an den Abtriebsendbereich 50 derselben angekoppelt. Dies bedeutet, dass das von der Elektromaschine 64 bereitgestellte Drehmoment zur Weiterleitung in das Differenzial 48 nicht über das Antriebsgetriebe 22 geleitet werden muss.

Der in Fig. 4 dargestellte Stellzustand des Elektromaschinengetriebes 66 kann auch dann vorgesehen bzw. genutzt werden, wenn bei grundsätzlich vom Antriebsaggregat 12 bereitgestelltem Antriebsdrehmoment im Antriebsgetriebe 22 ein Schaltvorgang mit dabei kurzzeitig auftretender Zugkraftunterbrechung durchgeführt wird. In der Phase der Zugkraftunterbrechung, also beispielsweise beim Wechsel von der ersten Gangstufe zur zweiten Gangstufe, kann kurzzeitig die Elektromaschine 64 zur Erzeugung eines Drehmoments erregt werden, um in der Phase der Zugkraftunterbrechung gleichwohl ein Antriebsdrehmoment in das Differenzial 48 einleiten zu können.

Des Weiteren kann in dem in Fig. 4 dargestellten Stellzustand des Elektromaschinengetriebes 66 die Elektromaschine 64 zum Bereitstellen eines Rückwärtsfahrantriebsdrehmoments genutzt werden. Da die Drehrichtung der Elektromaschine 64 beliebig einstellbar ist, kann in entsprechender Weise das Differenzialantriebsorgan 52 in beliebiger Richtung zur Drehung angetrieben werden. Zum Rückwärtsfahren ist dann im Antriebsgetriebe 22 keine der Drehzahlumsetzstufen 30, 32, 34, 36, 38, 40 aktiviert. Das Fahrzeug fährt rückwärts und die Getriebeausgangswelle 24 rotiert in einer zum normalen Antriebszustand entgegengesetzten Drehrichtung. Somit wird es möglich, alle im Antriebsgetriebe 22 vorgesehenen Drehzahlumsetzstufen auch für den normalen Fahrzustand zu verwenden, so dass das in den Figuren dargestellte Getriebe beispielsweise anstelle des Gangs R einen Gang "6" aufweisen könnte.

Mit einem derartigen Aufbau werden verschiedene besonders vorteilhafte Einsatzmöglichkeiten, wie sie vorangehend dargelegt wurden, mit einer Vereinfachung des Aufbaus eines Antriebssystems kombinierbar. So ist beispielsweise das Vorsehen eines separaten Anlassers nicht mehr erforderlich. Auch kann, wie vorangehend dargelegt, der Rückwärtsgang im Antriebsgetriebe entfallen. Auch ein zusätzlicher Generator zum Zurückspeisen von Energie beispielsweise im Bremszustand eines Fahrzeugs ist nicht erforderlich. In jedem der in den Figuren 3 und 4 dargestellten Stellzustände des Elektromaschinengetriebes 66 kann die Elektromaschine 64 tatsächlich als Generator genutzt werden.

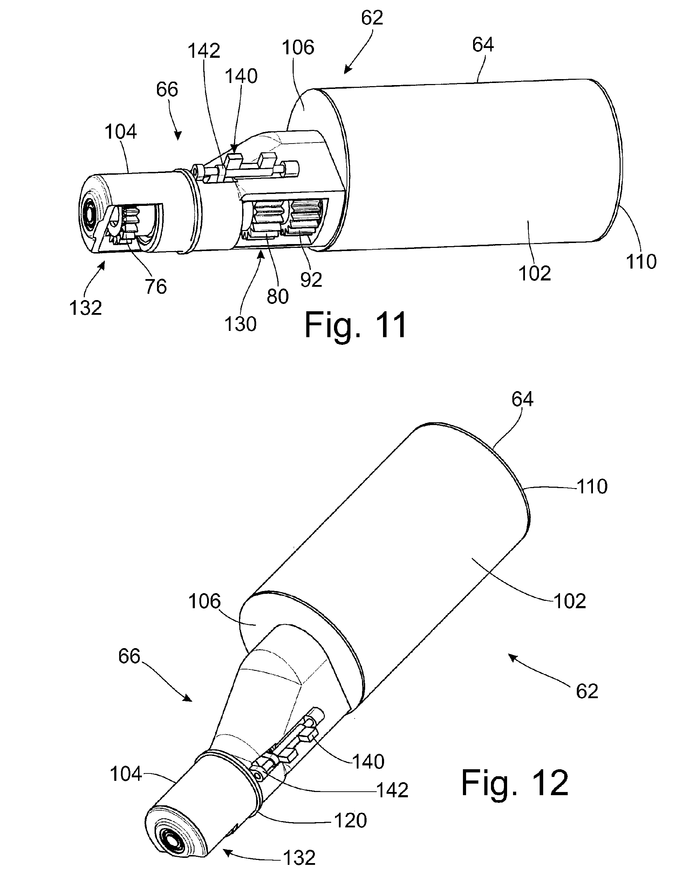

Ein weiterer wesentlicher Vorteil der erfindungsgemäß aufgebauten Elektromaschine/Elektromaschinengetriebe-Baugruppe 62 liegt darin, dass diese auch mit der axialen Staffelung von Elektromaschine 64 und Elektromaschinengetriebe 66 als separate Baugruppe in einen Antriebsstrang 68 bzw. ein Antriebsgetriebe 22 integriert werden kann. Dies ist in den Fig. 1, 3 und 4 beispielsweise dadurch angedeutet, dass die Elektromaschine/Elektromaschinengetriebe-Baugruppe 62 grundsätzlich exzentrisch zur Getriebeeingangswelle 16 am äußeren Randbereich des Antriebsgetriebegehäuses 26 positioniert ist. Nur Bereiche des Elektromaschinengetriebes 66 liegen innerhalb des vom Antriebsgetriebegehäuse 26 umschlossenen Nassraums 28. Die Elektromaschine 64 und insbesondere der mit dem Anlassübertragungsorgan 20 in Eingriff zu bringende Teil des Elektromaschinengetriebes 66, nämlich das erste Elektromaschinengetriebeübertragungsorgan 76 bzw. dessen Verzahnungsbereich liegen außerhalb des Nassraums 28 bzw. des Antriebsgetriebegehäuses 26. Die Elektromaschine / Elektromaschinen-Getriebe-Baugruppe 62 kann damit an verschiedene Antriebsgetriebe 22 angefügt werden, die lediglich so konzeptioniert sein müssen, dass in dem in den Fig. 1, 3 und 4 prinzipiell angedeuteten Aufbau ein Zugriff auf innerhalb des Nassraums 28 liegende Komponenten besteht. Dies wird nachfolgend mit Bezug auf die Fig. 10 bis 14 noch detaillierter erläutert.

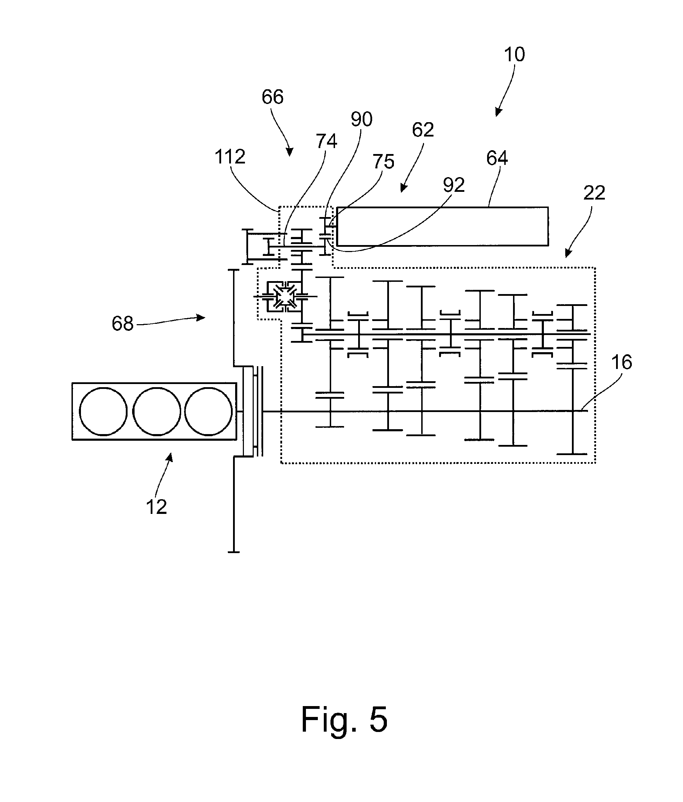

Eine alternative Ausgestaltungsform des Antriebssystems 10 ist in Fig. 5 in prinzipieller Weise dargestellt. Diese entspricht in wesentlichen Aspekten, insbesondere auch im Aufbau des Antriebsgetriebes 22 und der Wechselwirkung des Elektromaschinengetriebes 66 mit dem Antriebsstrang 68, dem vorangehend mit Bezug auf die Fig. 1 bis 4 beschriebenen Aufbau, so dass auf die diesbezüglichen Ausführungen verwiesen werden kann.

Man erkennt in Fig. 5, dass im Elektromaschinengetriebe 66 ein konstruktiver Unterschied insofern besteht, als die Elektromaschinengetriebewelle 74 zur Rotorwelle 75 nicht koaxial angeordnet, sondern bezüglich dieser versetzt liegt. An der Rotorwelle 75 ist ein beispielsweise als Zahnrad oder Ritzel ausgebildetes Rotorwellenübertragungsorgan 90 vorgesehen. An der Elektromaschinengetriebewelle 74 ist ein beispielsweise ebenfalls als Zahnrad oder Ritzel ausgebildetes Elektromaschinengetriebewellenübertragungsorgan 92 vorgesehen. Diese beiden Übertragungsorgane 90, 92 stehen in Drehmomentübertragungsverbindung miteinander und übertragen das von der Rotorwelle 75 abgegebene Drehmoment auf die zu dieser beispielsweise parallel liegende Elektromaschinengetriebewelle 74. Dies ermöglicht eine bessere Ausnutzung des zur Verfügung stehenden Bauraums bzw. führt zu einer größeren Freiheit bei der Positionierung verschiedener Baugruppen bezüglich einander. Gleichwohl liegt auch hier insbesondere die Elektromaschinengetriebewelle 74 exzentrisch zur Getriebeeingangswelle 16 und kann zusammen mit der Elektromaschine/Elektromaschinengetriebe-Baugruppe 62 in der vorangehend beschriebenen Art und Weise an das Antriebsgetriebe 22 angefügt werden.

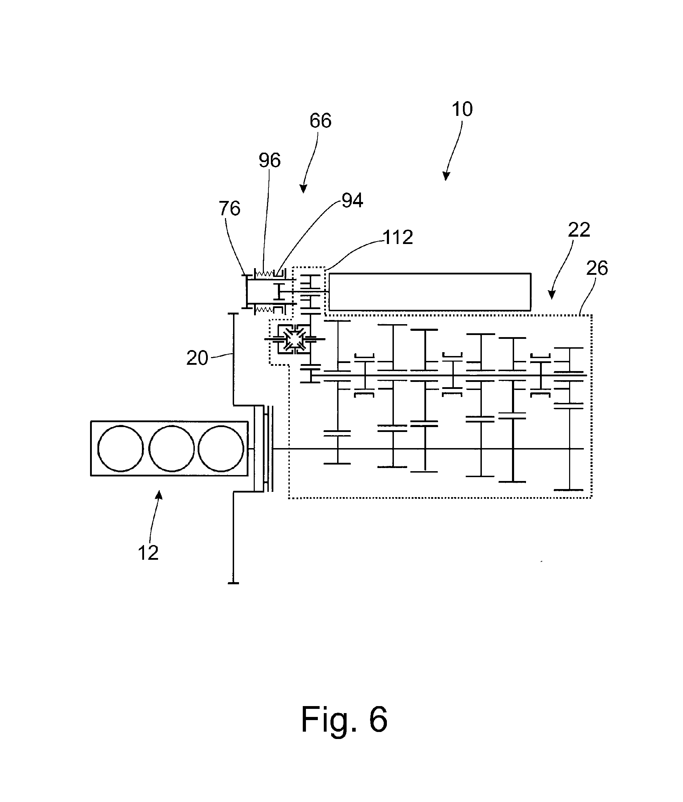

Eine weitere alternative Ausgestaltung eines Antriebssystems 10 ist in Fig. 6 dargestellt. Auch diese entspricht hinsichtlich des grundsätzlichen Aufbaus insbesondere auch des Antriebsgetriebes 22 beispielsweise dem mit Bezug auf die Fig. 1 bis 4 beschriebenen Aufbau, so dass auf diese Ausführungen verwiesen werden kann.

Man erkennt, dass bei dem in Fig. 6 dargestellten Aufbau im Elektromaschinengetriebe 66 das erste Elektromaschinengetriebeübertragungsorgan 76 durch die anhand einer Schaltgabel 94 symbolisch dargestellte Aktuatoranordnung über axialelastische Verbindungsmittel 96, beispielsweise eine Schraubendruckfeder, zur Durchführung der Axialbewegung beaufschlagbar ist. Soll das erste Elektromaschinengetriebeübertragungsorgan 76 in Eingriff mit dem Anlassübertragungsorgan 20 gebracht werden, so kann durch die auf diese Art und Weise eingeführte Elastizität durch die Schaltgabel 94 das erste Elektromaschinengetriebeübertragungsorgan 76 zunächst axial verschoben werden und unter zunehmender Spannung der axialelastischen Verbindungsmittel 96 axial gegen das Anlassübertragungsorgan 20 gepresst werden, bis eine derartige Relativdrehstellung vorliegt, dass deren Verzahnungen durch weitergehende Axialrelativbewegung in gegenseitigen Eingriff gelangen. Auch hierzu ist es besonders vorteilhaft, wenn die in Eingriff miteinander zu bringenden Verzahnungen in axialer Richtung spitz zulaufende Zähne aufweisen, allgemein also als Steilverzahnungen ausgebildet sind.

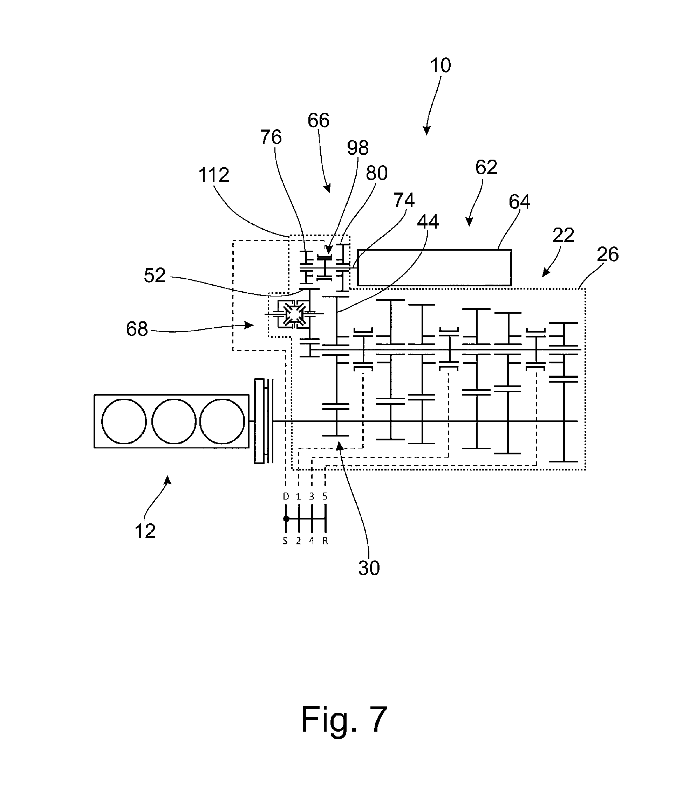

Eine weitere alternative Ausgestaltungsform des Antriebssystems 10 ist in Fig. 7 dargestellt. Auch hier besteht eine konstruktive Variation in der Ausgestaltung des Elektromaschinengetriebes 66. Bei dieser konstruktiven Auslegung sind beide Elektromaschinengetriebeübertragungsorgane 76, 80 auf der Elektromaschinengetriebewelle 74 grundsätzlich frei drehbar getragen, bezüglich dieser jedoch im Wesentlichen axial feststehend positioniert. Das erste Elektromaschinengetriebeübertragungsorgan 76 ist dabei so positioniert, dass es in permanentem Eingriff mit dem Differenzialübertragungsorgan 52 steht. Das zweite Elektromaschinengetriebeübertragungsorgan 80 ist derart positioniert, dass es in permanentem Eingriff mit dem zweiten Antriebsgetriebeübertragungsorgan 44 der Drehzahlumsetzstufe 30 steht. Durch eine allgemein mit 98 bezeichnete Koppelvorrichtung, beispielsweise ausgebildet nach Art einer Synchronisiervorrichtung, kann wahlweise eines der Elektromaschinengetriebeübertragungsorgane 76, 80 an die Elektromaschinengetriebewelle 74 und somit den Rotor 72 der Elektromaschine 64 angekoppelt werden.

In Fig. 7 ist der Zustand dargestellt, in welchem die Koppelvorrichtung 98 in einer zentralen bzw. neutralen Positionierung ist und keines der Elektromaschinengetriebeübertragungsorgane 76, 80 an die Elektromaschinengetriebewelle 74 angekoppelt ist. Dies hat zur Folge, dass die Elektromaschine/Elektromaschinengetriebe-Baugruppe 62 vom Antriebsstrang 68 vollständig entkoppelt ist.

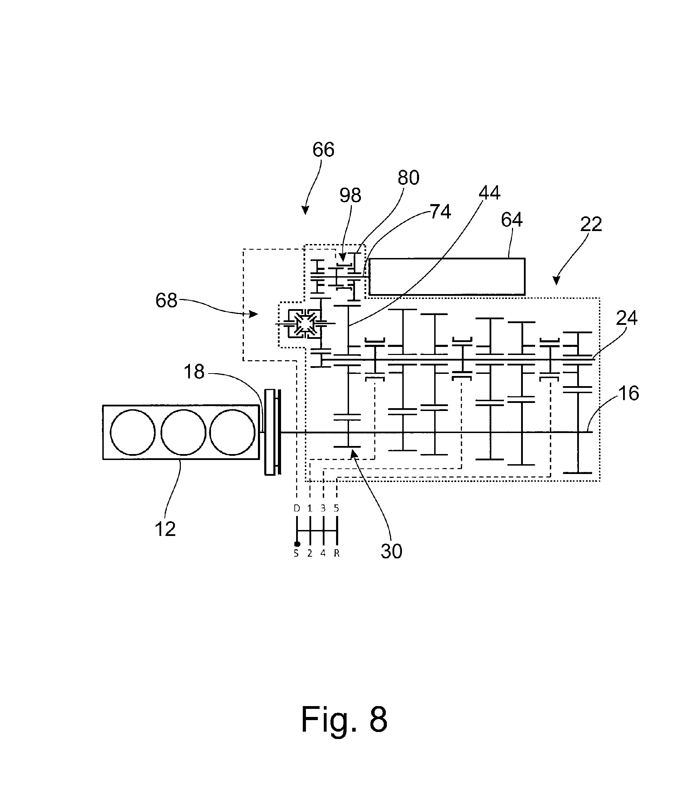

In Fig. 8 ist ein Stellzustand der Koppelvorrichtung 98 bzw. des Elektromaschinengetriebes 66 dargestellt, in welchem das zweite Elektromaschinengetriebeübertragungsorgan 80 an die Elektromaschinengetriebewelle 74 angekoppelt ist. Auf diese Art und Weise ist die Elektromaschine 64 bzw. deren Rotor 72 an das zweite Antriebsgetriebeübertragungsorgan 44 und über dieses die Getriebeeingangswelle 16, die Kupplung 14, das Antriebsorgan 18 und somit das Antriebsaggregat 12 angekoppelt. In diesem Zustand kann bei gleichzeitig nicht eingelegter bzw. aktivierter Drehzahlumsetzstufe 30 das von der Elektromaschine 64 gelieferte Drehmoment genutzt werden, um das Antriebsaggregat 12 zu starten. Da in diesem Zustand keine Kopplung zwischen dem zweiten Antriebsgetriebeübertragungsorgan 44 und der Getriebeausgangswelle 24 besteht, ist die Elektromaschine 64 bzw. deren Rotor im Drehmomentenfluss vor der Getriebeausgangswelle 24 an den Antriebsstrang 68 angekoppelt, nämlich im Bereich der Getriebeeingangswelle 16. Es ist selbstverständlich, dass bei derartiger Schaltung im Elektromaschinengetriebe 66 die Elektromaschine 64 insbesondere dann, wenn die erste Drehzahlumsetzstufe 30 aktiviert ist, auch als Generator oder zur Bereitstellung eines unterstützenden Drehmoments genutzt werden kann.

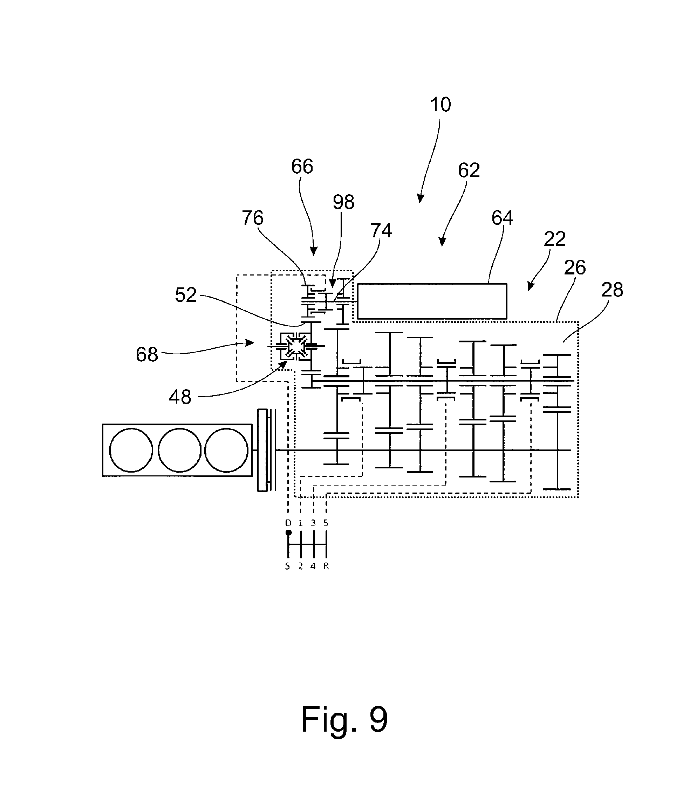

In Fig. 9 ist ein Stellzustand der Koppelvorrichtung 98 bzw. des Elektromaschinengetriebes 66 gezeigt, bei welcher das erste Elektromaschinengetriebeübertragungsorgan 76 an die Elektromaschinengetriebewelle 74 angekoppelt ist. Das von der Elektromaschine 64 in die Elektromaschinengetriebewelle 74 eingeleitete Drehmoment kann somit über das Differenzialantriebsorgan 52 und das Differenzial 48 in den Antriebsstrang 68 eingeleitet werden. Somit kann die Elektromaschine 64 sowohl zur Bereitstellung eines unterstützenden Drehmoments, als auch zur Bereitstellung des alleinigen Antriebsdrehmoments, als auch zur Bereitstellung eine Generatorfunktion genutzt werden.

Der besondere Vorteil der in den Fig. 7 bis 9 dargestellten Ausgestaltungsvariante ist, dass im Wesentlichen das gesamte Elektromaschinengetriebe 66 innerhalb des vom Antriebsgetriebegehäuse 26 umschlossenen Nassraums positioniert werden kann. Es ist somit keine zusätzliche fluiddicht abgeschlossene Drehdurchführung erforderlich, wie bei den vorangehenden Ausgestaltungsformen. Lediglich dort, wo die Elektromaschine 64 an das Antriebsgetriebegehäuse 26 angebunden ist, ist für einen fluiddichten Abschluss der zum Hindurchführen der Antriebsgetriebewelle 74 erforderlichen Öffnung des Antriebsgetriebegehäuses 26 zu sorgen.

Eine konstruktive Ausgestaltungsvariante der Elektromaschine/Elektromaschinengetriebe-Baugruppe ist in den Fig. 10 bis 14 dargestellt. Diese entspricht hinsichtlich ihres Aufbaus einerseits dem vorangehend mit Bezug auf die in Fig. 5 beschriebenem Aufbau, bei welchem die Rotorwelle 75 und die Elektromaschinengetriebewelle 74 nicht koaxial zueinander liegen, sondern einen Achsversatz aufweisen und über die beiden Übertragungsorgane 90, 92 zur Drehung gekoppelt sind. Weiter ist in dieser Ausgestaltungsvariante ein aus dem in Fig. 6 gezeigten Ausgestaltungsbeispiel bekannter Aspekt realisiert, nämlich das Bereitstellen axialelastischer Verbindungsmittel 96 z. B. in Form einer Druckfeder für das erste Elektromaschinengetriebeübertragungsorgan 76.

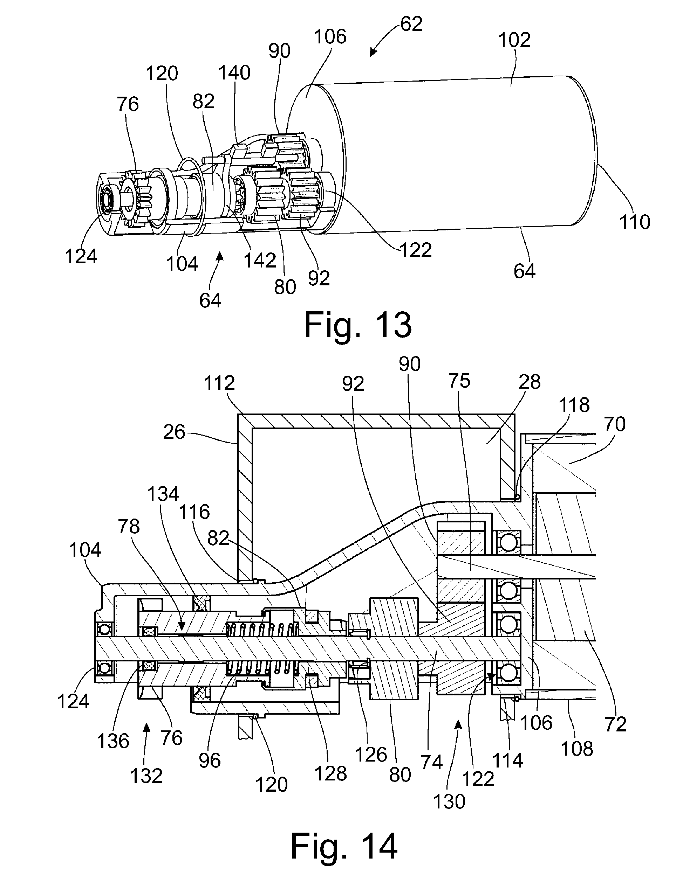

Die in den Fig. 10 bis 14 dargestellte Baugruppe 62 weist ein allgemein mit 100 bezeichnetes Baugruppengehäuse auf. Dieses kann untergliedert werden in einen Gehäusebereich 102 für die Elektromaschine 64 und einen Gehäusebereich 104 für das Elektromaschinengetriebe 66. Dabei zeigt beispielsweise die Fig. 14, dass der Gehäusebereich 104 in seinem der Elektromaschine 64 nahe liegenden Endbereich eine kreisscheibenartig ausgebildete Stirnwandung 106 trägt, welche beispielsweise in Verbindung mit einem im Wesentlichen zylindrischen Gehäuseteil 108 und einem am anderen axialen Endbereich desselben getragenen kreisscheibenartigen Gehäuseteil 110 im Wesentlichen dem Gehäusebereich 102 zuzuordnen ist.

Man erkennt in Fig. 14 weiter, dass in einem in den Fig. 1 bis 9 auch erkennbaren Gehäuseansatz 112 des Antriebsgetriebegehäuses 26 zwei Öffnungen 114, 116 gebildet sind, durch welche das Baugruppengehäuse 100 mit seinem Gehäusebereich 104 hindurchgeführt ist. Dabei ist in Anpassung an die in Richtung von der Elektromaschine 64 weg abnehmende Außenumfangsabmessung des Gehäusebereichs 104 die Öffnung 116 kleiner, als die Öffnung 114. Um nach dem axialen Einschieben des Gehäusebereichs 104 in den Gehäuseansatz 112 einen fluddichten Anschluss zu erlangen, sind zwei beispielsweise O-ringartig ausgebildete Dichtungselemente 118, 120 vorgesehen, die am Baugruppengehäuse 100 und am Gehäuseansatz 112 dichtend anliegen.

Im Baugruppengehäuse 100 ist die Elektromaschinengetriebewelle 74 in ihren beiden axialen Endbereichen in Lagerbereichen 122, 124 drehbar gelagert. Angrenzend an den Lagerbereich 122 ist das Elektromaschinengetriebewellenübertragungsorgan 92 an dieser festgelegt bzw. mit dieser drehbar getragen. Axial darauf folgend ist das zweite Elektromaschinengetriebeübertragungsorgan 80 auf der Elektromaschinengetriebewelle 74 frei drehbar gelagert und beispielsweise durch einen Sicherungsring 126 axial arretiert. Axial darauffolgend ist das bei diesem Ausgestaltungsbeispiel als separates Bauteil bereitgestellte Kopplungsorgan 82 vorgesehen, welches über eine Keilwellenverzahnung 128 mit der Elektromaschinengetriebewelle 74 zur gemeinsamen Drehung gekoppelt, bezüglich dieser jedoch axial verlagerbar ist. Zwischen dem Kopplungsorgan 82 und dem ersten Elektromaschinengetriebeübertragungsorgan 76 wirken die als Schraubendruckfeder ausgebildeten axialelastischen Verbindungsmittel 96. Um diese beispielsweise vorgespannt zu halten, kann das Kopplungsorgan 82 einen Bundbereich des ersten Elektromaschinengetriebeübertragungsorgans 76 von radial außen übergreifen. Dieses erste Elektromaschinengetriebeübertragungsorgan 76 wiederum ist durch die Keilverzahnung 78 mit der Elektromaschinengetriebewelle 74 drehfest, bezüglich dieser jedoch axial verlagerbar gehalten.

Um eine Drehmomentübertragungsverbindung zwischen den beiden Elektromaschinengetriebeübertragungsorganen 76, 80 und den mit diesen jeweils in Eingriff zu bringenden Übertragungsorganen, nämlich dem Differenzialübertragungsorgan 52 und dem Anlassübertragungsorgan 20, herstellen zu können, sind im Gehäusebereich 104 zwei Durchgriffsöffnungen 130 bzw. 132 ausgebildet. Durch die innerhalb des Gehäuseansatzes 112 zu positionierende Durchgriffsöffnung 130 wird der Zugriff auf das Differenzialübertragungsorgan 52 möglich. Diese Durchgriffsöffnung 130 ist somit zum Nassraum 28 offen. Durch die außerhalb des Gehäuseansatzes 112 liegende Durchgriffsöffnung 132 kann außerhalb des Nassraums 28 Zugriff auf das Anlassübertragungsorgan 20 erlangt werden. Um eine Fluidleckage aus dem Nassraum 28 zu vermeiden, ist das entlang der Elektromaschinengetriebewelle 74 verlagerbare erste Elektromaschinengetriebeübertragungsorgan 76 durch ein erstes ringartiges Dichtungselement 134 bezüglich des Gehäusebereichs 104 und durch ein zweites ringartiges Dichtungselement 136 bezüglich der Elektromaschinengetriebewelle 74 fluiddicht abgeschlossen, bezüglich dieser jedoch bewegbar und auch bezüglich des Gehäusebereichs 104 drehbar.

Zur Axialverschiebung des Kopplungsorgans 82 bzw. des ersten Elektromaschinengetriebeübertragungsorgans 76 sind eine allgemein mit 140 bezeichnete Schaltgabel und ein das Kopplungsorgan 82 außen umgreifendes Verbindungselement 142 vorgesehen. Dabei durchgreift das Verbindungselement 142 den Gehäusebereich 104, so dass die Schaltgabel 140 grundsätzlich außerhalb des Gehäusebereichs 104 zum Zugriff durch eine Aktuatoranordnung frei liegt. Die axiale Ankopplung des zweiten Elektromaschinengetriebeübertragungsorgans 80 an die Eletkromaschinengetriebewelle 74 erfolgt über das mit dieser drehfest gekoppelte Kopplungsorgan 82, wobei zur Herstellung einer Drehverbindung zwischen dem Kopplungsorgan 82 und dem zweiten Elektromaschinengetriebeübertragungsorgan 80 die durch Axialrelativbewegung in gegenseitigen Eingriff bringbaren Schaltklauenverzahnungen vorgesehen sind.

Die Fig. 10 bis 14 verdeutlichen noch einmal das Grundprinzip der vorliegenden Erfindung, nämlich dass durch den konstruktiven Aufbau die Elektromaschine/Elektromaschinengetriebe-Baugruppe als Baueinheit diese an das Antriebsgetriebe angesetzt und somit auch an den Antriebsstrang angekoppelt bzw. von diesem abgekoppelt werden kann. Hierzu trägt im Wesentlichen bei, dass die hierfür an der Baugruppe vorgesehenen Übertragungsorgane bzw. Ritzel auf einer grundsätzlich nicht dem Antriebsstrang selbst zuzurechnenden Welle, nämlich der Elektromaschinengetriebewelle, getragen sind und somit auch im Aufbauzustand eines Antriebsstrangs nicht konzentrisch zur Getriebeeingangswelle oder zu einer Kurbelwelle oder dergleichen zu positionieren sind.

## Patentansprüche

1. Antriebssystem für ein Fahrzeug, umfassend einen Antriebsstrang (68) mit
- einem Antriebsaggregat (12) mit einem Antriebsorgan (18),
- einem Antriebsgetriebe (22) mit wenigstens einer mit dem Antriebsorgan (18) zur Drehmomentübertragung gekoppelten oder koppelbaren Getriebeeingangswelle (16), einer Getriebeausgangswelle (24) und einer Mehrzahl von wahlweise aktivierbaren und deaktivierbaren, zwischen der wenigstens einen Getriebeeingangswelle (16) und der Getriebeausgangswelle (24) wirkenden Drehzahlumsetzstufen (30, 32, 34, 36, 38, 40),
- einer Elektromaschine (64) mit einem Stator (70) und einem Rotor (72),
- einem Elektromaschinengetriebe (66) zur wahlweisen
a) Abkopplung des Rotors (72) vom Antriebsstrang (68), oder
b) Ankopplung des Rotors (72) an den Antriebsstrang (68) im Drehmomentenfluss vor der Getriebeausgangswelle (24) oder
c) Ankopplung des Rotors (72) an den Antriebsstrang (68) im Drehmomentenfluss nach der Getriebeausgangswelle (24) oder an die Getriebeausgangswelle (24), **dadurch gekennzeichnet, dass** zur Ankopplung des Rotors (72) an den Antriebsstrang (68) im Drehmomentenfluss vor der Getriebeausgangswelle (24)
- der Rotor (72) an eine Drehzahlumsetzstufe (30) ankoppelbar ist,
oder
- der Rotor (72) an das Antriebsorgan (18) im Drehmomentenfluss vor einer Drehmomentenflussunterbrechungseinrichtung (14) ankoppelbar ist.

2. Antriebssystem nach Anspruch 1, **dadurch gekennzeichnet, dass** die Drehzahlumsetzstufen (30, 32, 34, 36, 38, 40) jeweils ein mit der Getriebeeingangswelle (16) gekoppeltes oder koppelbares erstes Antriebsgetriebeübertragungsorgan (42) und ein mit der Getriebeausgangswelle (24) gekoppeltes oder koppelbares zweites Antriebsgetriebeübertragungsorgan (44) umfassen und dass der Rotor (72) an ein Antriebsgetriebeübertragungsorgan (44), vorzugsweise zweites Antriebsgetriebeübertragungsorgan (44), der einen Drehzahlumsetzstufe (30) ankoppelbar ist.

3. Antriebsssystem nach Anspruch 2, **dadurch gekennzeichnet, dass** die Getriebeausgangswelle (24) einen Abtriebsendbereich (50) aufweist und dass die eine Drehzahlumsetzstufe (30) die dem Abtriebsendbereich (50) nächstliegend positionierte Drehzahlumsetzstufe (30) ist.

4. Antriebssystem nach Anspruch 3, **dadurch gekennzeichnet, dass** die Getriebeausgangswelle (24) im Abtriebsendbereich (50) in Drehmomentübertragungsverbindung mit einem Differenzial (48) steht.

5. Antriebssystem nach Anspruch 1, **dadurch gekennzeichnet, dass** ein Anlassübertragungsorgan (20) mit dem Antriebsorgan (18) gekoppelt ist und dass der Rotor (72) an das Anlassübertragungsorgan (20) ankoppelbar ist.

6. Antriebssystem nach einem der Ansprüche 2 bis 5, **dadurch gekennzeichnet, dass** das Elektromaschinengetriebe (66) ein mit dem Rotor (72) gekoppeltes oder koppelbares erstes Elektromaschinengetriebeübertragungsorgan (76) umfasst und dass das erste Elektromaschinenübertragungsorgan (76) mit dem einen Antriebsgetriebeübertragungsorgan (44) oder dem Anlassübertragungsorgan (20) in Drehmomentübertragungsverbindung steht oder bringbar ist.

7. Antriebssystem nach einem der Ansprüche 1 bis 6, **dadurch gekennzeichnet, dass** das Elektromaschinengetriebe (66) ein mit dem Rotor (72) gekoppeltes oder koppelbares zweites Elektromaschinengetriebeübertragungsorgan (80) umfasst und dass das zweite Elektromaschinengetriebeübertragungsorgan (80) mit der Getriebeausgangswelle (24) oder/und einem durch die Getriebeausgangswelle (24) antreibbaren Differenzial (48) in Drehmomentübertragungsverbindung steht oder bringbar ist.

8. Antriebssystem nach Anspruch 7, **dadurch gekennzeichnet, dass** das zweite Elektromaschinengetriebeübertragungsorgan (80) mit der Getriebeausgangswelle (24) oder/und dem Differenzial (48) in Drehmomentübertragungsverbindung steht und mit dem Rotor (72) koppelbar ist.

9. Antriebssystem nach einem der Ansprüche 1 bis 8, **dadurch gekennzeichnet, dass** die Elektromaschine (64) außerhalb eines Antriebsgetriebegehäuses (26) des Antriebsgetriebes (22) angeordnet ist.

10. Antriebssystem nach einem der Ansprüche 1 bis 9, **dadurch gekennzeichnet, dass** eine Aktuatoranordnung vorgesehen ist zum wahlweisen Abkoppeln des Rotors (72) vom Antriebsstrang (68) oder Ankoppeln des Rotors (72) an den Antriebsstrang (72), wobei vorzugsweise die Aktuatoranordnung (22) durch eine Antriebsgetriebeaktuatoranordnung zum Aktivieren und Deaktivieren der Drehzahlumsetzstufen (30, 32, 34, 36, 38, 40) bereitgestellt ist.

11. Elektromaschine/Elektromaschinengetriebe-Baugruppe, insbesondere für ein Antriebssystem (10) nach einem der vorangehenden Ansprüche, umfassend:
- eine Elektromaschine (64) mit einem Stator (70) und einem Rotor (72),
- ein Elektromaschinengetriebe (66) mit einem mit dem Rotor (72) gekoppelten oder koppelbaren ersten Elektromaschinengetriebeübertragungsorgan (76) und einem mit dem Rotor (72) gekoppelten oder koppelbaren zweiten Elektromaschinengetriebeübertragungsorgan (80), **gekennzeichnet durch** eine **durch** den Rotor (72) zur Drehung antreibbare Elektromaschinengetriebewelle (74), wobei wenigstens ein Elektromaschinengetriebeübertragungsorgan (76, 80) wahlweise mit der Elektromaschinengetriebewelle (74) zur gemeinsamen Drehung koppelbar ist.

12. Baugruppe nach Anspruch 11, **dadurch gekennzeichnet, dass** die Elektromaschinengetriebewelle (74) an wenigstens einem, vorzugsweise zwei in Richtung der Elektromaschinengetriebewelle (74) in Abstand zueinander angeordneten Lagerbereichen (122, 124) in einem Baugruppengehäuse (100) gelagert ist, wobei vorzugsweise das Baugruppengehäuse (100) in Zuordnung zu wenigstens einem Elektromaschinengetriebeübertragungsorgan (76, 80) eine Durchgriffsöffnung (130, 132) zur Herstellung einer Drehmomentübertragungswechselwirkung mit einem Antriebsstrangübertragungsorgan (20, 52) aufweist.

13. Baugruppe nach Anspruch 12, **dadurch gekennzeichnet, dass** wenigstens ein Elektromaschinengetriebeübertragungsorgan (76) bezüglich des Baugruppengehäuses (100) oder/und bezüglich der Elektromaschinengetriebewelle (74) fluiddicht abgedichtet drehbar oder/und in Richtung der Elektromaschinengetriebewelle (74) verschiebbar ist.

14. Baugruppe nach einem der Ansprüche 11 bis 13, **dadurch gekennzeichnet, dass** ein Elektromaschinengetriebeübertragungsorgan (76) zum Herstellen und Aufheben einer Drehmomentübertragungsverbindung mit einem Antriebsstrangübertragungsorgan (20) auf der Elektromaschinengetriebewelle (74) verschiebbar ist.

15. Baugruppe nach Anspruch 14, **dadurch gekennzeichnet, dass** das eine Elektromaschinengetriebeübertragungsorgan (76) mit der Elektromaschinengetriebewelle (74) zur gemeinsamen Drehung gekoppelt ist.

16. Baugruppe nach einem der Ansprüche 14 oder 15, **dadurch gekennzeichnet, dass** dem einen Elektromaschinengetriebeübertragungsorgan (76) eine Aktuatoranordnung zur axialen Verschiebung auf der Elektromaschinengetriebewelle (74) zugeordnet ist, wobei vorzugsweise das eine Elektromaschinengetriebeübertragungsorgan (76) über axialelastische Verbindungsmittel (96) durch die Aktuatoranordnung beaufschlagbar ist.

17. Baugruppe nach einem der Ansprüche 11 bis 16, **dadurch gekennzeichnet, dass** wenigstens ein Elektromaschinengetriebeübertragungsorgan (76, 80) auf der Elektromaschinengetriebewelle (74) drehbar getragen ist und vermittels eines Kopplungsorgans (82) mit der Elektromaschinengetriebewelle (74) zur gemeinsamen Drehung koppelbar ist.
